# EUROPEAN PATENT SPECIFICATION

(11) **EP 4 596 424 B1**
(45) Date of publication and mention of the grant of the patent: **29.07.2026**
(21) Application number: 25185256.2
(22) Date of filing: 12.01.2023
(51) Int. Cl.: B64C 3/28, B64C 21/06, B25B 11/00, B64F 5/10, B64F 5/50

(54) **METHOD OF HANDLING A MICROPERFORATED LEADING EDGE SKIN, PORTABLE INSTALLATION TOOL FOR POSITIONING A SKIN ON A LEADING EDGE, AND ASSEMBLY PROCESS FOR INSTALLING A MICROPERFORATED SKIN ON A LEADING EDGE USING SAID TOOL**
VERFAHREN ZUR HANDHABUNG EINER MIKROPERFORIERTEN VORDERKANTENHAUT, TRAGBARES INSTALLATIONSWERKZEUG ZUR POSITIONIERUNG EINER HAUT AUF EINER VORDERKANTE UND MONTAGEVERFAHREN
PROCÉDÉ DE MANIPULATION D'UN REVÊTEMENT DE BORD D'ATTAQUE MICROPERFORÉ, OUTIL D'INSTALLATION PORTABLE POUR POSITIONNER UN REVÊTEMENT SUR UN BORD D'ATTAQUE

(43) Date of publication of application: 06.08.2025
(62) Divisional of application: 23382016.6
(73) Proprietor: Aernnova Aerospace, 01510 Miñano (ES); Deutsches Zentrum für Luft- und Raumfahrt e.V., 53227 Bonn-Oberkassel (DE)
(72) Inventor: Cruz Palacios, David, 28034 Madrid (ES); Martin de la Escalera, Federico, 28034 Madrid (ES); Castillo Acero, Miguel Angel, 45200 Illescas (ES); Kleineberg, Markus, 30966 Hemmingen (DE); Herrmann, Ulrich, 38108 Braunschweig (DE)
(74) Representative: Clarke, Modet y Cía., S.L.

(56) References cited:
- DE-A1- 102016 109 026
- GB-A- 2 586 053
- US-A1- 2017 197 706
- US-A1- 2017 327 202

## Description

### TECHNICAL FIELD OF THE INVENTION

The present invention is included in the field of aircraft structures, and also in that of the aerodynamic surfaces designed for laminar flow.

The field of application of the present invention is that of aerodynamic surfaces equipped with an outer skin microperforated for active laminar flow control. This type of surfaces are mainly used for leading edges of wing-type elements (wing, stabilizers...), although it could be also applied to any other component where achieving laminar flow by suctioning the boundary layer could lead to a reduction of the aerodynamic drag. This could be also applicable to other industries where the drag reduction is beneficial, such are trains, automotive or other.

In particular, the invention is of great interest for the design of leading edges of wing-type elements on aircrafts that include the aforementioned suction system for laminar flow control.

### BACKGROUND OF THE INVENTION

Achieving laminar flow over aircraft aerodynamic surfaces has been a goal for many decades because, in general, laminar flow over an aerodynamic surface result in reduced drag compared to turbulent flow over the same surface. There are two strategies that may be applied, which are natural laminar flow and active laminar flow control.

Natural laminar flow is produced by shaping the aerodynamic surfaces in a manner such that laminar flow naturally occurs and is maintained along the extent of the aerodynamic surface during all or during targeted flight conditions. However, shaping certain aerodynamic surfaces to achieve natural laminar flow is not practical.

Active laminar flow control involves modifying the air flow over an aerodynamic surface so that laminar flow, which occurs over the leading edge, is maintained over the extent of the surface by preventing a turbulent flow trip. One way to achieve this is by continuously removing low energy air from the boundary layer along the extent of the flow surface to prevent the boundary from thickening and eventually tripping to turbulent flow. This can be achieved by using many small holes closely spaced and generally evenly distributed along and across the flow surface with suction to pull air from the boundary layer into the holes in a generally continuous way.

The external skin of a leading edge designed for active laminar flow involves the drilling of thousands of tiny holes, closely and periodically spaced, across the leading edge surface. This usually involves the use of a very thin outer skin, which is non-structural and has only an aerodynamic purpose, assembled on the main structural subset of the aircraft component where it is located (usually, the leading edge of a wing-type component).

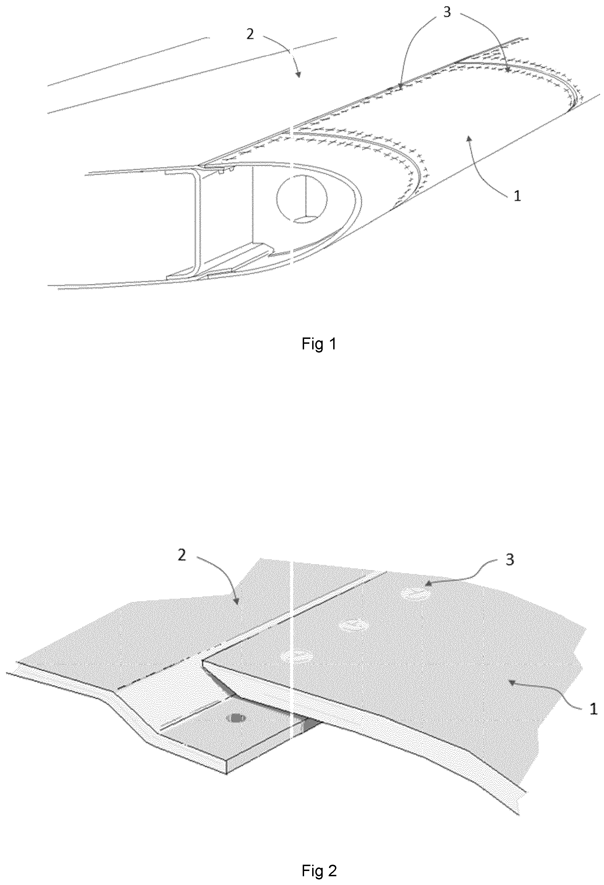

Below the outer microperforated skin the suction chamber (sometimes, several separated chambers) is located, where the air of the boundary layer is suctioned. This suction chamber is constructed by attaching the outer microperforated skin over the main structural element, and by adding a series of spacers between them, which usually act also as stiffeners for the very thin outer skin (Fig 1). These stiffeners may have different section shapes, such as "omega" (or "hat"), "L", "C", "Z" or others.

Leading edges of aircraft wing-type components are usually removable elements attached to the main structure of the wing or stabilizer by means of non-permanent fasteners (usually screws or bolts) for maintenance reasons. These fasteners are potential sources of aerodynamic drag, if the fastener head is not perfectly aligned with the aerodynamic surface, as usually occurs due to manufacturing and installation tolerances. In particular, the leading edge areas are of extreme importance in terms of aerodynamic smoothness if a laminar flow is desired, thus making extreme the importance of the smoothness in the area.

To achieve the desired smoothness in the area, labour intensive operations are usually done where the fasteners are installed, by applying sealant on the potential voids around the fasteners head to achieve a smooth surface, or similar operations. In removable joints such are those of leading edges, this time consuming operation has to be repeated every time the part is removed for maintenance.

In addition to this problem with fasteners, laminar flow leading edges which include the aforementioned microperforated skin have another problem: the sensibility of this outer skin to dirt, dust or similar, that may cover the tiny microholes used for boundary layer suction, thus making the device inoperative if a significant part of these holes are affected by those depositions. In addition to this, this outer, ultra-thin, microperforated skin is also very sensitive to potential damage by accidental hits during operations on ground, or by hail impacts or similar, which usually lead to frequent repairs. There is a need, thus, to frequently remove this outer skin for cleaning the microholes area or to repair or replace a damaged skin.

This maintenance of the outer microperforated skin usually requires the removal of the entire leading edge component first, leading to the aforementioned problem with the fasteners attaching the leading edge to the fixed structure and the need to smooth their surface. Moreover, two disassembly-assembly operations are usually needed, the first to remove the leading edge from the structure, and the second one to remove the microperforated skin from the leading edge component.

To avoid having to disassemble the whole component, a removable outer skin may be devised, attaching it to the leading edge component through a second group of non-permanent fasteners (different from those joining the leading edge to the fixed structure). However, this is only a partial solution that still maintains the need to smooth the heads of those fasteners every time they are installed.

The purpose of this invention is to solve many of those exposed problems by devising a removable microperforated outer skin without the presence of fasteners on the aerodynamic surface, and by also hiding the fasteners joining the leading edge components to the fixed structure of the aircraft.

The handling and assembly of this outer microperforated skin is also a cumbersome process. Because of the very low thickness that is typical of this type of parts (tipically in the range of tenths of millimeter), the skin has a high flexibility that difficults its handling. Although the inclusion of stiffeners improves somehow this behavior, the skin still maintains a low rigidity in the direction normal to those stiffeners, making difficult its manipulation and assembly. This problem is even worse in the case of the skin of the invention, designed to be easily removable for maintenance during the operational life of the aircraft: its handling and operations of assembly and disassembly must be as easy as possible in an environment not so well equipped as an aircraft assembly plant.

The handling problem could be alleviated with the use of a temporary rig or some type of auxiliary frame that could be attached to the skin on its outer face, but the problem is how to attach that rig to the microperforated skin.

Rigs equipped with vacuum cups are well known solutions for handling large, thin and flexible parts for aeronautical assemblies and in other industries. However, in this case the existence of a multitude of microholes in the skin makes the use of vacuum cups difficult. Conventional vacuum equipment used for similar tasks do not work because of the vacuum loses due to the microholes in the skin. Although there exist vacuum equipment designed for manipulation of porous parts by using a high vacuum power, which maintains the parts attached to the vacuum cups despite the losses, the use of high vacuum is risky when handling thin and delicate parts as these skins, which usually have thickness in the order of tenths of millimeter. The need of this type of special equipment is also costly and not usually available in current aeronautical assembly facilities, not to say in maintenance facilities.

Anyway, the installation of the skin on a rig prior to its installation on the receiving structure is just a first step to facilitate the assembly process, but there is still a cumbersome and time consuming process to carry out before attaching the skin to the structure: carefully adjusting the position of the skin over the receiving structure to keep the gaps between the skin and the adjacent elements in the required values to guarantee a good laminar flow.

The use of coordination holes between the rig holding the skin and the supporting structure is a good alternative to this time consuming adjustment process, and it is a well known process applied in aeronautical assemblies and other industries. By including coordination holes both in the microperforated skin and the receiving structure and adding pins to the rig also coordinated with this coordination holes, it is possible to install easily and quickly the skin on the receiving structure in its right place, maintaining the adequate gaps with the adjacent parts of the structure without the need of time consuming adjustments.

However, this is still a delicate and time consuming process, because the set of skin plus rig is usually a heavy set that has to be handled by several people or even with the help of cranes, and its approach to the receiving structure is delicate, because of the risk of hitting and damaging it. The use of the rig solves, thus, the problem of the flexibility of the skin, but adds the problem of the weight and volume, making still difficult and time consuming the assembly of the skin even with the help of the coordination holes.

There is a need for an easily removable microperforated skin that minimizes the labour intensive operations of smoothing the heads of the fasteners attaching it to the structure, and for an assembly process and tools that ease the microperforated skin handling and assembly, taking into account that they should be used in the operational environment of a maintenance facility, not an assembly plant.

Document DE102016109026A1 discloses an aerodynamic profile body for flying objects, with a flow surface around which an airflow can flow and is designed in an intake area for drawing in the airflow flowing around the flow surface for active flow control. The profile body has an internal supporting structure and an outer layer, with negative pressure chambers between the supporting structure and the outer layer, extending across the span and lying transversely to the direction of the airflow around the flow surface.

Document US2017/327202A1 discloses an aircraft joint between overlapping first and second components including a fastener having a head and a shank, and a fastener retainer fixedly attached to the second component at the overlap region. The fastener retainer has a recess and a through hole. The fastener head is in the recess and between the fastener retainer and the second component. The fastener shank extends through the hole in the fastener retainer and into the first component to fasten the first component to the second component.

Document US2017/197706A1 discloses a leading edge section with laminar flow control including: a perforated outer skin, a perforated inner skin, and a plurality of suction chambers between both skins. The leading edge section includes a plurality of stringers span-wise at the leading edge section, and integrally formed with the outer skin, such that the inner skin is joined to the stringers. A method for manufacturing a leading edge section integrating a laminar flow control system is also described, wherein a perforated inner skin is joined with a perforated outer skin having a plurality of stringers integrally formed with the outer skin.

Document GB2586053A discloses an aircraft wing with a laminar flow control system comprising a conduit drawing air from a leading edge exterior surface and structurally supporting Krueger flap. A method of at least partially shielding perforations in an aircraft wing leading edge region from debris (e.g. insects) is also disclosed, wherein an aerodynamic surface moves to change airflow path over the wing. The perforations provide apertures for drawing air via a duct of a boundary layer control system.

The development of a removable outer microperforated skin without visible fasteners, and the development of the tools and process to remove and reinstall it in the context of maintenance operations is the purpose of this invention.

### BRIEF DESCRIPTION OF DRAWINGS

Present specification is complemented with a set of drawings, illustrative of the preferred example and never limiting the invention.
Fig 1 shows the state of the art for joining a removable aerodynamic part to a fixed structure
Fig 2 shows a detail of the conventional joint with fasteners between aerodynamic surfaces
Fig 3 shows a section of the configuration of the invention, with the fasteners of the joint hidden below the outer microperforated skin.
Fig 4 is a global view of the configuration of the invention, with the access in the lower area to access the fasteners joining the removable skin to the main structure
Fig 5 is a sketch of the configuration of the invention including a leading edge flap (Krüger flap)
Fig 6 is a view of a typical leading edge with a Krüger flap deployed, showing the access from below to the internal structure
Fig 7 is a detail of the outer microperforated skin before and after adapting itself elastically to the receiving structure
Fig 8 shows a microperforated sheet covered with an electrostatic plastic film
Fig 9 shows a proof of concept of holding a microperforated sheet with vacuum cups after applying an electrostatic plastic film on it
Fig 10 shows both parts (fixed and rotating) of the assembly tooling for the skin, separated
Fig 11 is a top view of the assembly tooling for the skin after joining both parts of the tool through its hinge
Fig 12 is a sketch showing the installation of the first part of the tool on the structure
Fig 13 is a sketch showing the attachment of the second part of the tool to the first part through the hinge, and the attachment of the microperforated skin to the vacuum cups
Fig 14 shows the sequence of rotation until the skin is positioned in its final place on the structure
Fig 15 is a view of a leading edge representative of the invention with the assembly tooling for the microperforated skin in the final step of the assembly, prior to the removal of the tool

### DESCRIPTION OF THE INVENTION

The present invention consists in a new structural design for vehicle parts (usually aircrafts, although may be applicable also to other high-speed vehicles affected by aerodynamics) that includes an outer microperforated skin for active laminar flow control by suction of the boundary layer. The invention is mainly characterized by the possibility of easily disassembling the outer skin for maintenance, and by the minimization or absence of fasteners appearing on the outer surface of the component. The process for handling and installing this removable skin during the maintenance operations is also disclosed for clarity and descriptive purposes but is not part of the invention.

In particular, the invention is of great interest for the design of leading edges of wing-type elements on aircrafts that include the aforementioned suction system for laminar flow control. It could be also applicable to other elements such are leading edges of engine nacelles, aerodynamic fairings, etc.

When joining a removable part (1) such as a leading edge or a fairing to the receiving structure (2), usually the removable part is attached by means of screws (3) distributed around its perimeter (Fig 1, Fig 2). Every time these screws are assembled, they have to be later covered with aerodynamic sealant and paint to achieve a uniform and smooth aerodynamic surface, in order to reduce drag and to enable laminar flow downstream of their location.

The purpose of the present invention is to eliminate or at least to minimize the number of fasteners (3) appearing on the aerodynamic surface to join those parts to the receiving structure, and also to include the possibility of disassembling only the outer skin for maintenance without having to remove the entire leading edge section.

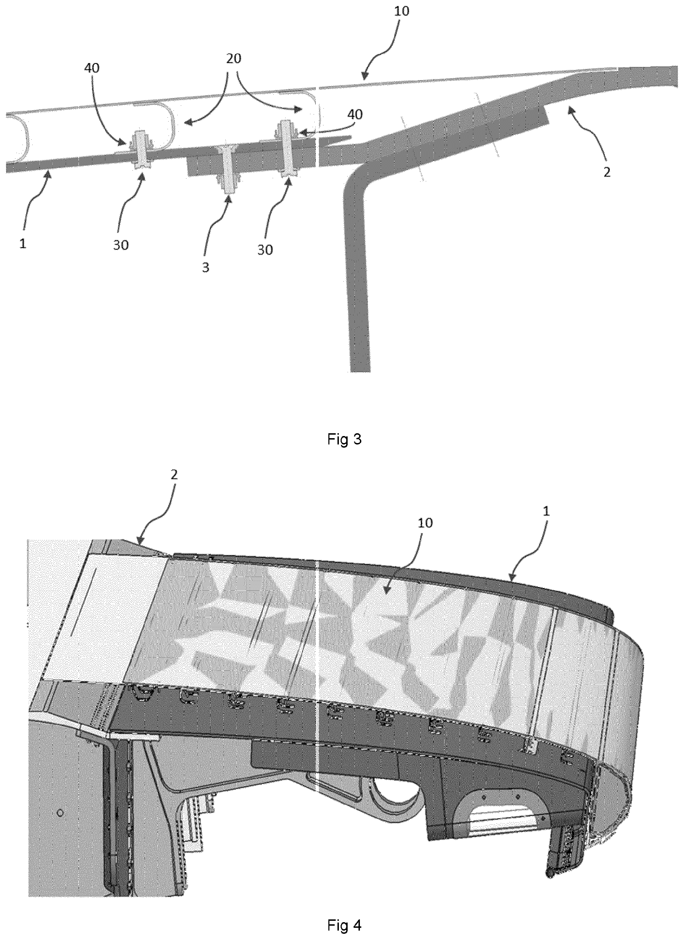

This is achieved by the inclusion of an outer microperforated skin (10) that includes a series of associated stiffeners (20) which also act as spacers for the formation of the suction chamber, and in some embodiments of the invention with receiving attachments such as anchor nuts (40) installed on them (Fig 3). The stiffeners, that may have a cross section of different shapes (usually "omega", "C" or "Z") are preferably adhesively bonded to the outer skin, although other joining methods may be used depending on their material: welding could be used if both parts, skin and stiffeners, are made of metal (although welding could easily cause deformations on the thin outer skin), co-curing could be used if both parts are made of composite materials, or any other joining method. Also, it could be manufactured as an integral part with both skin and stiffeners forming a single part.

This subassembly (or integral part) of outer skin with stiffeners is joined to the main structure of the leading edge by means of non-permanent fasteners (30) (screws or similar) that join the stiffeners to the leading edge (1). These fasteners are installed from below, from inside the leading edge section, and are accessible through an open cavity on the intrados (lower skin) of the leading edge (Fig 4), and attach to the anchor nuts (40) of the stiffeners (20). Alternatively, expandable fasteners or similar may be installed that do not need anchor nuts.

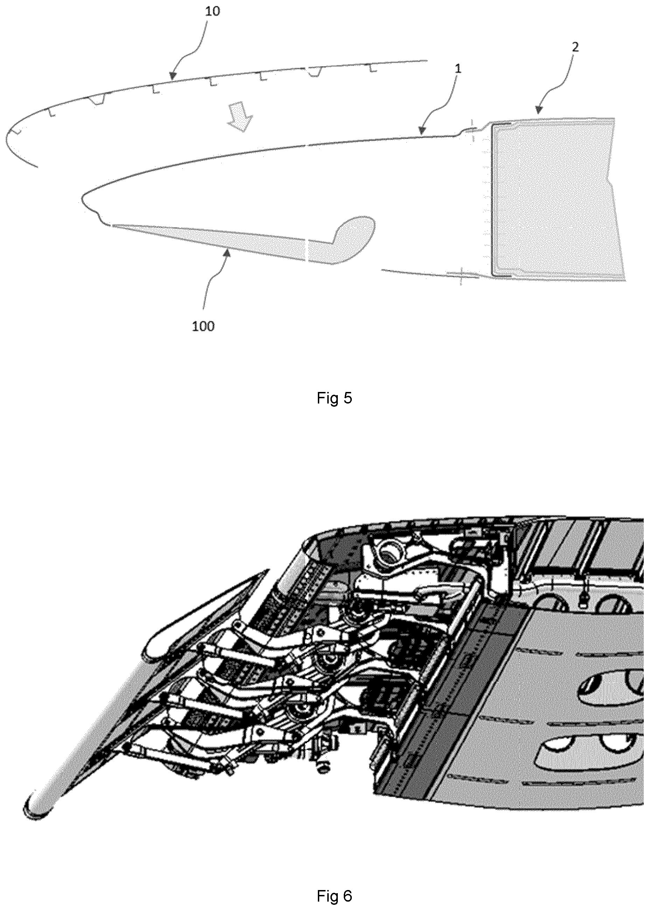

The access in the lower area of the leading edge may be the hole occupied by a Krüger flap (100) when the flap is deployed or disassembled (Fig 5, Fig 6); or it may be achieved by including removable access panels in the lower skin of the leading edge. Since the intrados is an area of high pressure, there is no problem in having removable panels with visible fasteners in this area from a laminar flow point of view.

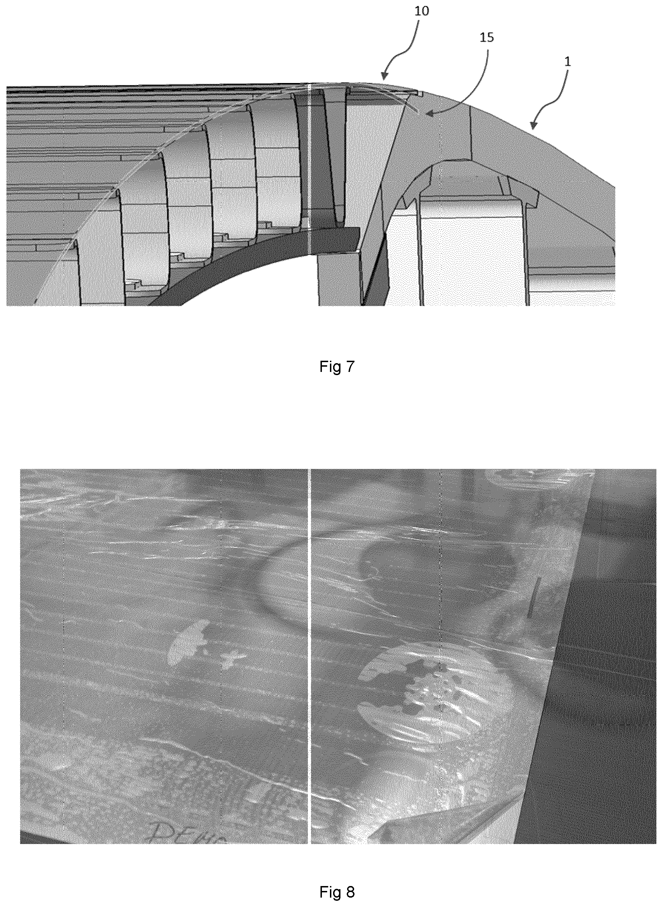

As seen on Fig 3, to minimize steps and ensure smoothness on the aerodynamic surface, the rear border of the outer microperforated skin (10) rests directly on the fixed structure of the aircraft (2). To avoid the need to install fasteners in this area (which could not be installed from below, because of lack of access, and thus would have to be installed from outside, what is undesirable as already mentioned), the outer skin is previously bent in a shape that would cause interference with the fixed structure in this area when installed (Fig 7, item 15). This causes the skin to be elastically forced in this zone during its installation, guaranteeing that it will remain resting on the fixed structure because of the tension to which it is subjected (Fig 7).

On the other part, the assembly of the main leading edge structure (1) to the fixed structure (2) of the aircraft is made in a conventional way through non-permanent fasteners (3) that are now covered by the removable microperforated skin (10) (Fig 3). This way, the main structural fasteners attaching the leading edge to the fixed structure are removed from the critical aerodynamic surface, eliminating the need to smooth their heads with sealants or equivalent operations.

The product described above solves many of the problems related to the maintenance and repair of the outer microperforated skin, but a new process has to be developed for the handling and assembly of this skin in order to minimize the time and labour costs associated to that maintenance task, and to perform it in aircraft maintenance facilities with portable tools.

Although the problem of the flexibility of the skin may be solved by attaching it to an auxiliary rig or frame that could make use of vacuum cups to hold the skin, the new problem is how to hold with vacuum cups a porous part without using special high power equipment, which is undesirable as explained in the background section. A first solution found to avoid this problem, not included in the present invention, but just disclosed for clarity and descriptive purposes, is to temporarily cover the microperforated skin with a thin adhesive film that makes the part airtight and thus able to be handled with conventional vacuum cups of low suction power. However, the use of an adhesive film is cumbersome, since it is sometimes difficult to be removed and, more important, it could also leave some residue on the surface of the part. This is especially worrying in a microperforated part, where the adhesive residue could clog the tiny microholes, ruining the effectiveness of the laminar flow system.

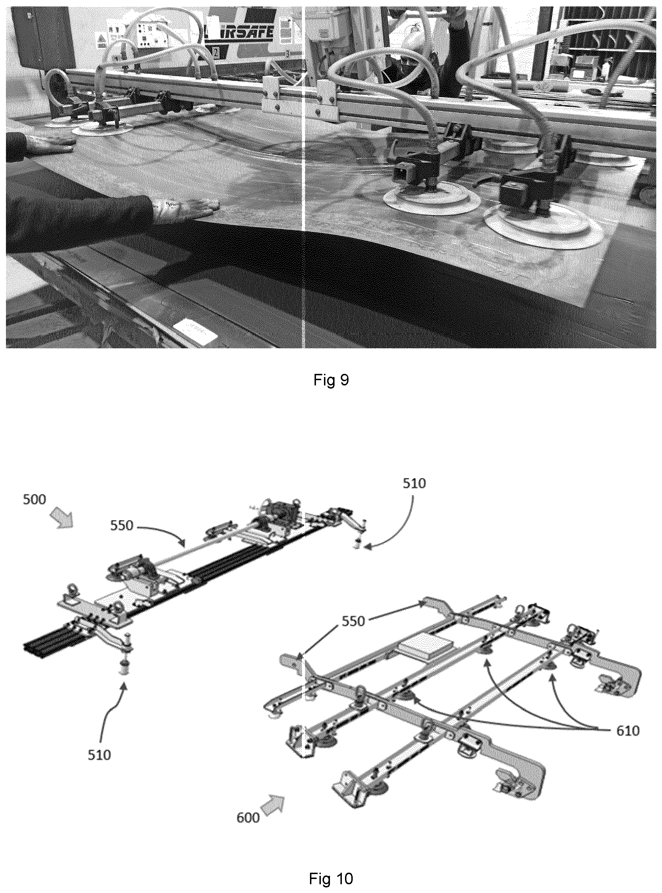

After many trials it was found, however, that by using a plastic film that adheres to the skin surface by means of electrostatic charge (Fig 8) is enough to guarantee the airtightness of the skin while allowing it to be handled by means of conventional vacuum cups. The use of electrostatic vinyl or similar electrostatic plastic films is thus the preferred solution to handle the removable microperforated skin installed on a rig by means of vacuum cups (Fig 9).

The next problem to be solved is how to position the set skin-rig on the receiving structure in an effective and risk-free way, minimizing the installation time and the risk of impacts against the structure, and also using non-permanent (portable) tools in the environment of an aircraft maintenance facility.

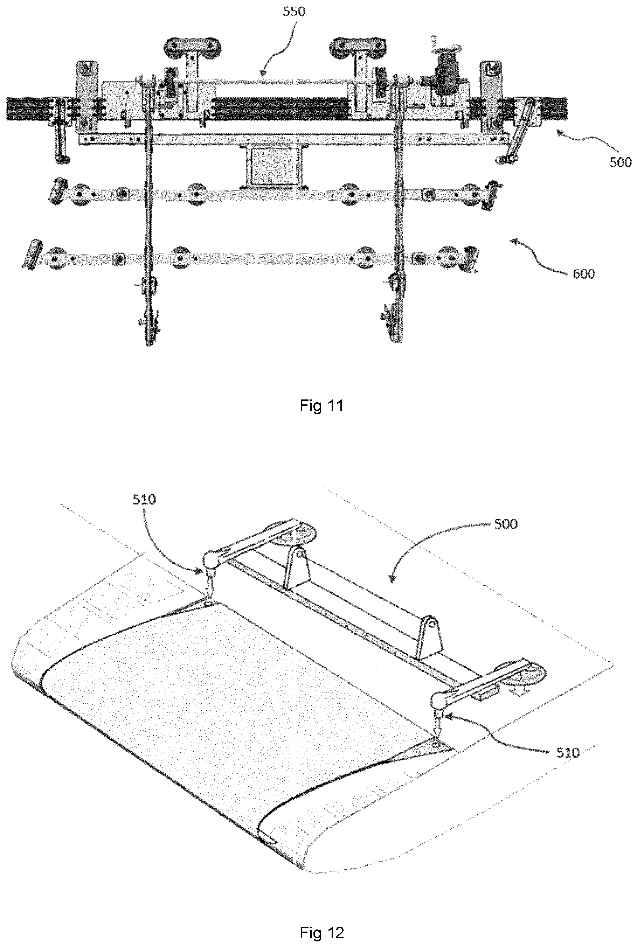

This is achieved by developing a new articulated tool composed by two parts joined through a hinge (Fig 10, Fig 11), disclosed herein just for descriptive purposes but not being part of the invention. The first part of the tool (500), which will be called the fixed part of the tool because it does not rotates around the hinge, includes the pins (510) to locate the tool on the receiving structure of the aircraft through at least a couple of tooling holes in that structure, although other equivalent positioning devices could be used. The second part of the tool (600) is the rig with the vacuum cups (610) holding the skin. This second part (600) is joined to the first part (500) of the tool through the hinge (550).

This way, the skin installation is made in several steps: first (Fig 12), the fixed part of the tool (500) is positioned on the receiving structure through the pins (510) in the tool and the corresponding tooling holes in the structure. Since this fixed part of the tool is smaller and lighter than the rig with vacuum cups holding the skin, its installation on the structure of the aircraft may be done in an efficient and risk-free manner. Although the use of pins in the tool and corresponding tooling holes in the structure of the aircraft is a preferred solution for the location of the fixed part of the tool (500), any other positioning system (slots, part contours...) could be used.

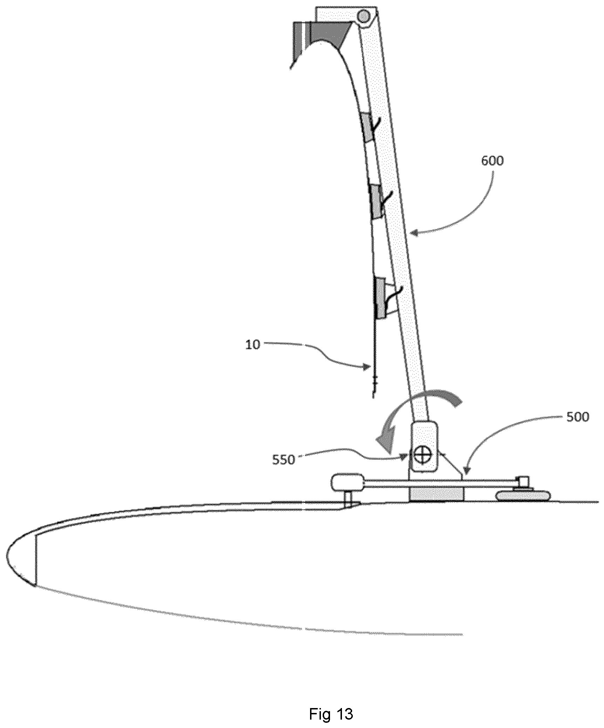

Next (Fig 13), the second part of the tool (600), composed by the rig with the vacuum cups to hold the skin, is attached to the hinge (550) of the fixed part (500) of the tool in a vertical position, rotated in relation to its final position on the structure. Then, the skin (10) is attached to the rig with the vacuum cups and located on it through coordination holes, or by controlling its perimeter, or by a combination of both. Since the rig is rotated in a vertical position, the flexible skin is easier to manipulate in that position, while maintained tense by its own weight.

Alternatively to the sequence presented above, the skin (10) could be positioned on the rig and holded by the vacuum cups prior to the attachment of the rig (600) to the fixed part (500) of the tool.

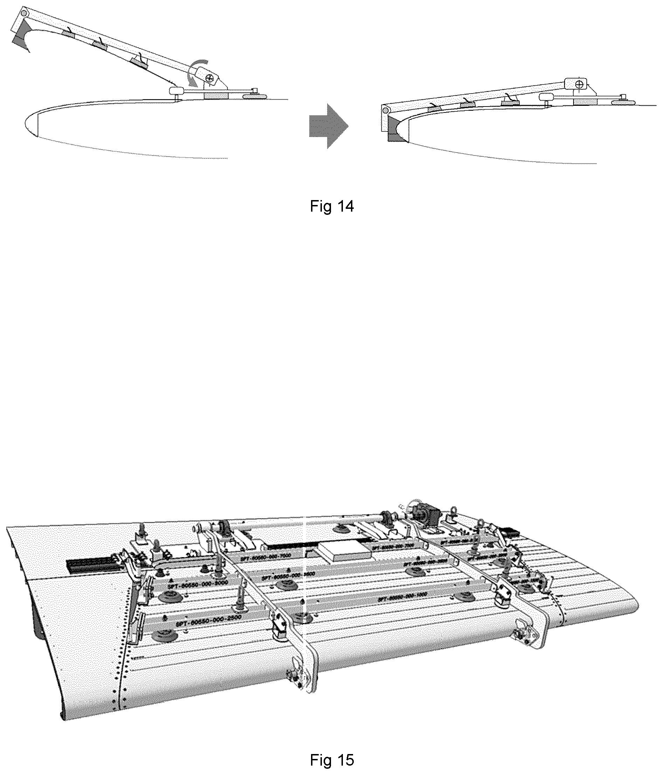

Finally, the rig holding the skin rotates around the hinge until the skin rests on the receiving structure of the aircraft in its final position. (Fig 14, Fig 15)

Once the skin is already positioned in its right place thanks to the tool and operations previously described, it is attached to the main structure of the leading edge (1) by installing a series of fasteners (30) attaching to the stiffeners (20) associated to the skin (10) (Fig 3). Once the skin is secured to the receiving structure, the first (500) and second (600) parts of the assembly tooling used to handle and position the skin may be removed.

The reverse sequence may be used for an easy disassembly of the microperforated skin.

### DETAILED DESCRIPTION OF PARTICULAR EMBODIMENTS OF THE INVENTION

The invention described in previous paragraphs may be implemented with multiple variations in terms of product, assembly process and assembly tool.

In a particular embodiment of the invention, the microperforated skin (10) with its associated stiffeners (20) is a single, integral part.

Although usually the microperforated skin (10) is manufactured in titanium, there is no limitation from the point of view of this invention to the material used for the manufacturing of the skin (10), the stiffeners (20) or both of them when manufactured in an integral part. Metallic, composite or plastic materials could be considered.

In a preferred embodiment of the invention (Fig 3), the attachment of the stiffeners (20) to the receiving structure (1) is made by using non-permanent fasteners (30) that attach to anchor nuts (40) previously installed on the stiffeners (20).

In other embodiments of the invention, the use of anchor nuts pre-installed on the stiffeners is not required by using blind fasteners (expandable or some other type of fastener not requiring a receiving attachment device, such as a nut).

In a preferred embodiment of this disclosure (Fig 12) not included in the present invention, the fixed part (500) of the assembly tool is located on the receiving structure through a couple of pins (510) in the tool and corresponding tooling holes located in the aircraft structure. In this preferred embodiment, once positioned the tool on the structure, it is secured by means of auxiliary vacuum cups included in the tool that act on the aircraft structure.

In another embodiment of this disclosure not included in the present invention, the rig (600) holding the skin is equipped with pressure sensors (load cells) to detect any deformation or stress induced to the skin (10) during the assembly process.

In another embodiment shown in this disclosure but not included in the present invention, one or both parts of the tools (500, 600) used for the installation of the skin are equipped with profilometers to check that the skin is being installed maintaining the required gaps with the adjacent parts of the structure.

## Claims

1. A leading edge for an aircraft designed for active laminar flow control comprising
- a removable microperforated skin (10) for boundary layer suction, such microperforated skin (10) comprising stiffeners (20) on its inner face that also act as spacers for the formation of suction chambers, and
- a supporting structure (1) configured to form the suction chambers together with the microperforated skin (10), wherein
• the microperforated skin (10) with its associated stiffeners (20) is joined to the supporting structure (1) by means of non-permanent fasteners (30) attaching the stiffeners (20) to the supporting structure (1) and not visible on the outer surface of the microperforated skin (10), **characterized in that**
• the leading edge includes access to a lower, inner surface of its supporting structure (1) when attached to the aircraft, configured to allow the installation of the non-permanent fasteners (30) joining the microperforated skin (10) to the supporting structure (1).

2. The leading edge according to claim 1 where the stiffeners (20) associated to the microperforated skin (10) include attachment devices (40) for receiving the non-permanent fasteners (30) joining the microperforated skin (10) to the supporting structure (1).

3. The leading edge according to any of the claims 1 or 2 where the microperforated skin (10) comprises a free border configured to rest on a receiving structure (2) of the aircraft by elastically forcing the border from its free standing position to rest on the receiving structure (2), and without fasteners in this border.

4. The leading edge according to any of the claims 1 to 3 where the access to the lower surface of the supporting structure (1) when attached to the aircraft, is made through removable panels.

5. The leading edge according to any of the claims 1 to 3 where the access to the lower surface of the supporting structure (1) when attached to the aircraft, is made through a hole left by a leading edge flap (100) of the aircraft when the flap (100) is deployed or disassembled.

6. The leading edge according to any of the claims 1 to 5 where the main structural fasteners (3) joining the leading edge (1) to the receiving structure (2) of the aircraft are covered by the microperforated skin (10) and are not exposed to the airflow.

7. A wing or stabilizer for an aircraft comprising a leading edge according to any of the claims 1 to 6.

8. An aircraft comprising a leading edge according to any of the claims 1 to 6.

## Patentansprüche

1. Vorderkante für ein Luftfahrzeug, die zur aktiven Steuerung der laminaren Strömung ausgelegt ist, umfassend
- eine abnehmbare, mikroperforierte Haut (10) zur Absaugung der Grenzschicht, wobei eine solche mikroperforierte Haut (10) an ihrer Innenseite Versteifungen (20) aufweist, die gleichzeitig als Abstandshalter für die Bildung von Saugkammern dienen, und
- eine Stützstruktur (1), die dazu konfiguriert ist, zusammen mit der mikroperforierten Haut (10) die Saugkammern zu bilden, wobei
• die mikroperforierte Haut (10) mit ihren zugeordneten Versteifungen (20) mittels nicht permanenter Befestigungselemente (30) mit der Stützstruktur (1) verbunden ist, wobei die Versteifungen (20) an der Stützstruktur (1) angebracht sind und an der äußeren Oberfläche der mikroperforierten Haut (10) nicht sichtbar sind, **dadurch gekennzeichnet, dass**
• die Vorderkante Zugang zu einer unteren, inneren Oberfläche ihrer Stützstruktur (1) beinhaltet, wenn sie am Luftfahrzeug angebracht ist, und dazu konfiguriert ist, die Installation der nicht permanenten Befestigungselemente (30) zu ermöglichen, die die mikroperforierte Haut (10) mit der Stützstruktur (1) verbinden.

2. Vorderkante nach Anspruch 1, wobei die der mikroperforierten Haut (10) zugeordneten Versteifungen (20) Anbringungsvorrichtungen (40) zum Aufnehmen der nicht permanenten Befestigungselemente (30) enthalten, die die mikroperforierte Haut (10) mit der Stützstruktur (1) verbinden.

3. Vorderkante nach einem der Ansprüche 1 oder 2, wobei die mikroperforierte Haut (10) einen freien Rand umfasst, der dazu konfiguriert ist, auf einer Aufnahmestruktur (2) des Luftfahrzeugs aufzuliegen, indem der Rand elastisch aus seiner freistehenden Position zum Aufliegen auf der Aufnahmestruktur (2) gezwungen wird, und wobei keine Befestigungselemente in diesem Rand vorhanden sind.

4. Vorderkante nach einem der Ansprüche 1 bis 3, wobei der Zugang zur unteren Oberfläche der Stützstruktur (1) bei Anbringung am Luftfahrzeug über abnehmbare Verkleidungsplatten erfolgt.

5. Vorderkante nach einem der Ansprüche 1 bis 3, wobei der Zugang zur unteren Oberfläche der Stützstruktur (1) bei Anbringung am Luftfahrzeug über ein Loch erfolgt, das von einer Vorderkantenklappe (100) des Luftfahrzeugs hinterlassen wird, wenn die Klappe (100) ausgefahren oder demontiert ist.

6. Vorderkante nach einem der Ansprüche 1 bis 5, wobei die strukturellen Hauptbefestigungselemente (3), die die Vorderkante (1) mit der Aufnahmestruktur (2) des Luftfahrzeugs verbinden, von der mikroperforierten Haut (10) abgedeckt sind und nicht dem Luftstrom ausgesetzt sind.

7. Flügel oder Stabilisator für ein Luftfahrzeug, umfassend eine Vorderkante nach einem der Ansprüche 1 bis 6.

8. Luftfahrzeug, umfassend eine Vorderkante nach einem der Ansprüche 1 bis 6.

## Revendications

1. Bord d'attaque pour un aéronef conçu pour une commande active de l'écoulement laminaire comprenant
- une peau microperforée amovible (10) pour l'aspiration de la couche limite, ladite peau microperforée (10) comprenant des raidisseurs (20) sur sa face intérieure qui servent également d'entretoises pour la formation de chambres d'aspiration, et
- une structure de support (1) configurée pour former les chambres d'aspiration conjointement avec la peau microperforée (10), dans lequel
• la peau microperforée (10) avec ses raidisseurs associés (20) est assemblée à la structure de support (1) au moyen de fixations non permanentes (30) fixant les raidisseurs (20) à la structure de support (1) et non visibles sur la surface extérieure de la peau microperforée (10), **caractérisé en ce que**
• le bord d'attaque comprend un accès à une surface inférieure intérieure de sa structure de support (1) lorsqu'il est fixé à l'aéronef, configuré pour permettre l'installation des fixations non permanentes (30) assemblant la peau microperforée (10) à la structure de support (1).

2. Bord d'attaque selon la revendication 1, dans lequel les raidisseurs (20) associés à la peau microperforée (10) comprennent des dispositifs de fixation (40) destinés à recevoir les fixations non permanentes (30) assemblant la peau microperforée (10) à la structure de support (1).

3. Bord d'attaque selon l'une quelconque des revendications 1 ou 2, dans lequel la peau microperforée (10) comprend un bord libre configuré pour reposer sur une structure de réception (2) de l'aéronef en sollicitant élastiquement le bord depuis sa position libre jusqu'à ce qu'il repose sur la structure de réception (2), et sans fixations dans ce bord.

4. Bord d'attaque selon l'une quelconque des revendications 1 à 3, dans lequel l'accès à la surface inférieure de la structure de support (1), lorsqu'il est fixé à l'aéronef, est réalisé par l'intermédiaire de panneaux amovibles.

5. Bord d'attaque selon l'une quelconque des revendications 1 à 3, dans lequel l'accès à la surface inférieure de la structure de support (1), lorsqu'il est fixé à l'aéronef, est réalisé par l'intermédiaire d'une ouverture laissée par un volet de bord d'attaque (100) de l'aéronef lorsque le volet (100) est déployé ou démonté.

6. Bord d'attaque selon l'une quelconque des revendications 1 à 5, dans lequel les fixations structurelles principales (3) assemblant le bord d'attaque (1) à la structure de réception (2) de l'aéronef sont recouvertes par la peau microperforée (10) et ne sont pas exposées à l'écoulement d'air.

7. Aile ou stabilisateur pour un aéronef comprenant un bord d'attaque selon l'une quelconque des revendications 1 à 6.

8. Aéronef comprenant un bord d'attaque selon l'une quelconque des revendications 1 à 6.
